# EUROPEAN PATENT SPECIFICATION

(11) **EP 1 991 908 B1**
(45) Date of publication and mention of the grant of the patent: **14.08.2013**
(21) Application number: 07752044.3
(22) Date of filing: 01.03.2007
(51) Int. Cl.: G03B 21/00

(54) **STEADY STATE SURFACE MODE DEVICE FOR STEREOSCOPIC PROJECTION**
OBERFLÄCHENMODUS-VORRICHTUNG MIT STABILEM ZUSTAND ZUR STEROSKOPISCHEN PROJEKTION
DISPOSITIF A MODE SUPERFICIEL STABLE POUR PROJECTION STEREOSCOPIQUE

(30) Priority: 03.03.2006 US 367617
(43) Date of publication of application: 19.11.2008
(73) Proprietor: RealD Inc., Beverly Hills, CA 90210 (US)
(72) Inventor: LIPTON, Lenny, Los Angeles, CA 90046 (US)
(74) Representative: Beck, Simon Antony
(86) International application number: PCT/US2007/005317
(87) International publication number: WO 2007/103157

(56) References cited:
- US-A- 4 792 850
- US-A- 4 813 771
- US-A- 5 481 321
- US-A- 5 481 321
- US-A- 5 843 333
- US-A- 5 990 991
- US-A1- 2005 225 726
- US-B1- 6 222 605

## Description

### BACKGROUND OF THE INVENTION

### Field of the Invention

Embodiments of the present invention relate generally to the art of motion picture projection, and more specifically to a device to produce tuned circularly polarized light for stereoscopic image selection for motion pictures using multiple projectors or multiple projection lenses or optics.

### Description of the Related Art

The projection of stereoscopic motion pictures by means of polarization is a well established art with many contributors. A commercial milestone was reached in the 1939 New York World's Fair with the projection of a stereoscopic motion picture using linear polarized light sheet filters for image selection using two 35-millimeter projectors. That system has been used, with relatively minor modifications, up until the present time. This design was used in the early 1950s for the projection of 3-D motion pictures in the theatrical cinema, and has been used for the past 20 years or so in location-based entertainment and theme parks.

In some cases 70-millimeter projectors have been used instead of 35- millimeter projectors and lately digital projectors have also been employed. For film projection left and right projectors are carefully aligned and interlocked mechanically or electrically. Linear polarizers, whose axes are orthogonal, are often used mounted in front of the left and right projector lenses, and every member of the audience wears glasses with linear polarizing analyzers for image selection and viewing. A screen that conserves polarization is invariably coated or painted with aluminum pigment.

Faltering attempts were made to deploy circular polarization in the early 1980s for the theatrical cinema, but it was reported that the resultant image crosstalk was too significant for adequate viewing. The use of circularly polarized light for image selection improves the ability to see a good image even with the observer's head tipped at a substantial angle.

Lately the theatrical cinema implementation has been modified from the 1939 design. Today many movie theaters are equipped with a single digital projector that uses a field-sequential approach for stereoscopic imaging. The field sequential approach is accomplished by running a succession of left and right images at a high enough field rate in conjunction with a circular polarization modulator located in front of the projection lens. In this arrangement, the image is reflected off of the surface of a polarization conserving screen, and the audience members view the image through circular polarizer analyzer eyewear. Circular polarization allows for head-tipping or the ability to locate one's head with a great deal of freedom and is a significant improvement especially when viewing lengthy feature films because it enhances the comfort and the enjoyment of the viewing experience.

The major limitation of the single projector technique compared to dual projection is that single projection has reduced brightness. The field sequential or time-multiplex technique has a duty cycle that reduces the amount of light by about 50%. In addition, the circular polarization process absorbs light, and the net result is that approximately 15% of the available projector light reaches each eye. A screen with a gain of two can improve the situation and give an effective 30% transmission compared to the planar mode. Because the amount of light that can be projected on the screen using this technique is so reduced, it can be quite difficult to fill a large screen with enough light to make a good image. At the present time, the largest theater screen that can be used for this process is one that is roughly 40 feet wide for projection with spherical lenses and 47 feet wide for projection with anamorphic lenses. That means that theaters with larger screens - often up to 60 feet wide - cannot use this single projector process and successfully show field-sequential three-dimensional movies.

There is also a quality degrading effect associated with the aluminum painted projection screens that may result from the paint pigment's binder used in so-called "silver screens". This binder may cause phase-shifting or birefringence effects that can change the optimum value of the wavelength of reflected circular polarized light. The effect favors a flexible technique for tuning the source of circular polarization to match or cancel out the screen binder effect.

Additionally the circular polarizer analyzers used in eyewear vary in quality from batch to batch and factory to factory. Specifically, the value of the retarder component of the circular polarizers can vary in wavelength optimization. The result of screen binder birefringence and analyzer retarder variations leads to a reduction in left and right channel isolation. Such isolation can cause unpleasant ghost images which detract from the enjoyment of the stereoscopic movie.

Traditional dual projection polarizers cannot readily correct for the phase shifts arising from different screen binder materials and eyewear batch-to-batch variations in circular analyzers. Each theater installation can require access to a large number of sheet circular polarizers with associated retarders of different values in order to properly match the projector polarizers with eyewear analyzers to account for the birefringence effect of the screen binder material. The best way to tune a system to have maximum channel isolation is to be able to continuously vary the value of the wavelength of the retarder components of the circular polarizers of the projectors or projector lenses. In such a procedure the operator can pass through the optimal point for correction and then return to that optimal point, insuring that optimization has indeed been achieved.

It is therefore beneficial to provide an overall design that can enhance the theater viewing experience by employing relatively large screens, particularly enhancing the viewing of stereoscopic images and movies. Such a design may be beneficial in overcoming drawbacks present in previously known systems and having improved functionality over devices exhibiting those negative aspects described herein, especially with regard to improving left and right channel isolation.

US 5,481,321 discloses a stereoscopic film projection system comprising sheet polarizers and surface mode device electro-optical modulators such that the electrical state of each modulator is voltage dependent in response to a sensor which detects index marks on the film being projected.

### SUMMARY OF THE INVENTION

Aspects of the invention are provided in the accompanying claims.

According to an embodiment of the present invention, there is provided an apparatus comprising a sheet polarizer and a surface mode device (SMD) electro-optical modulator configured to operate in a steady state mode. The sheet polarizer and SMD electro-optical modulator are configured to be employed with at least one selection device comprising an analyzer, and the steady state SMD electro-optical modulator is tuned to a wavelength of the analyzer in the selection device. In addition, the SMD electro-optical modulator, and possibly two such modulators, depending upon the embodiment, may be tuned to take into account any birefringent properties of polarization conserving theater screens.

These and other advantages of the embodiments of present invention will become apparent to those skilled in the art from the following detailed description of the invention and the accompanying drawings.

### BRIEF DESCRIPTION OF THE DRAWINGS

FIG. 1A is an illustration of the components of a tunable circular polarization producing steady state SMD modulator;
FIG. 1B is an illustration of the components of a tunable circular polarization producing steady state SMD modulator of the opposite handedness of that shown in FIG. 1A;
FIG. 2 represents the drive waveform that is used for powering the modulator in the steady state mode;
FIG. 3A shows the dual projection setup using SMD modulators in a theater environment;
FIG. 3B is a drawing of the circular polarizing analyzing spectacles;
FIG. 4 is schematic representation of an SMD;
FIG. 5A schematically illustrates a dual image projection system using converging prisms and the steady state SMD;
FIG. 5B schematically illustrates a dual image projection system using twin lenses and the steady state SMD; and
FIG. 5C is a drawing representing the image format of the stereopairs projected by the arrangements shown in FIGs. 5A and 5B.

### DETAILED DESCRIPTION OF EMBODIMENTS OF THE INVENTION

The present design uses a surface mode device (SMD) where circular polarized light is created through the use of a sheet polarizer in combination with the SMD. This electro-optical modulator is operated in a steady state mode that enables tuning the device to the exact wavelength of the analyzers in the selection device eyewear to optimize image selection and reduce crosstalk. In addition, tuning may be required to correct for any phase shifting resulting from the birefringence produced by projection screen binder materials.

The SMD is also known in the literature as the pi-cell. The SMD is referred to here as an SMD or a modulator, or an electro-optical modulator, or any combination thereof.

As noted, due to certain projection brightness constraints, screen size has previously been limited. One solution to the screen size limitation is to use two projectors, thereby doubling the light output and that is the approach taken in this disclosure. The present design provides high quality circularly polarized light for image selection when using a dual projection or twin lens or optics approach. The source of circularly polarized light is tuned so that its retardation precisely or nearly precisely matches the characteristics of the entire optical system. Using such a method optimizes extinction and maximizes channel separation.

Good channel isolation, providing that little or none of the left eye's image leaks into the right eye's image and vice versa, is one of the most important qualities of a well designed stereoscopic projection system. If channel isolation is poor the image appears as though it has been double exposed and the viewer experiences visual fatigue.

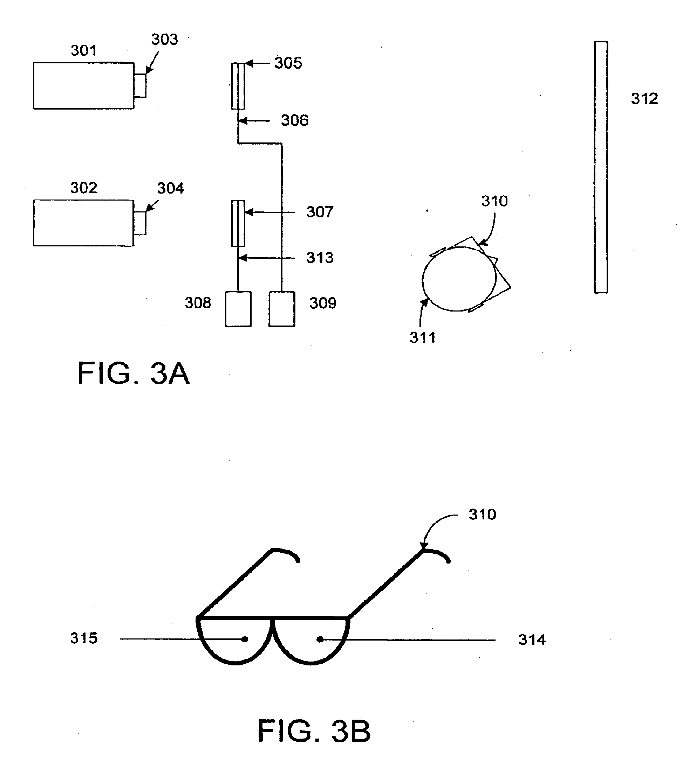

When a projection system produces circularly polarized light using a quarter- wave retarder in conjunction with a linear polarizer the light is optimized for only a single wavelength - the wavelength of the retarder. For circular polarization, the linear polarizer's axis is at 45 degrees to the axis of the quarter- wave retarder. The result of light traversing the polarizer and then the quarter- wave retarder is circularly polarized light - but light that is perfectly circularly polarized for only one specific wavelength -- the wavelength of the retarder. For optimum extinction to take place, the polarizer and analyzer are wavelength matched. Extinction in this case is defined as the transmission of light passing through the polarizer and analyzer given light of one handedness attempting to pass through an analyzer of the opposite handedness. This is discussed further with regard to FIGs. 3A and 3B.

Manufacture of sheet retarders for projector or eyewear circular polarizers involves stretching a plastic material and the process can be difficult to control because of non-homogeneities inherent in the stretching process. The circular polarizer used at the projector is preferably matched to eyewear analyzers in order to obtain the best possible extinction and hence, the best possible channel isolation to produce the best possible stereoscopic image. Such matching of polarizer with analyzer can be achieved electro-optically and this allows for correction for the system's total polarization characteristics and even for batch to batch variations in analyzer material caused by the vagaries of retarder fabrication.

By tuning the voltage applied to the SMD, the value of circular polarization for a specific wavelength can be tuned to match the screen and analyzer characteristics. Such tuning can be accomplished empirically by viewing projected test targets through circular polarizer analyzers. The bias voltage supplied to the SMD modulator may be adjusted so that the observer can empirically establish the maximum channel isolation. If too much cross-talk exists between the left and right channels, the stereoscopic viewing experience is compromised, particularly for the most dramatic off-screen effects.

The present design includes devices for producing circularly polarized projection light precisely tuned to the requirements of a particular theater screen and the selection devices used in a theater setting. The device uses the liquid crystal SMD, but the modulator is electrically driven in a different manner from what has been employed in previous designs. The present device is driven at a steady state rather than in a switching mode.

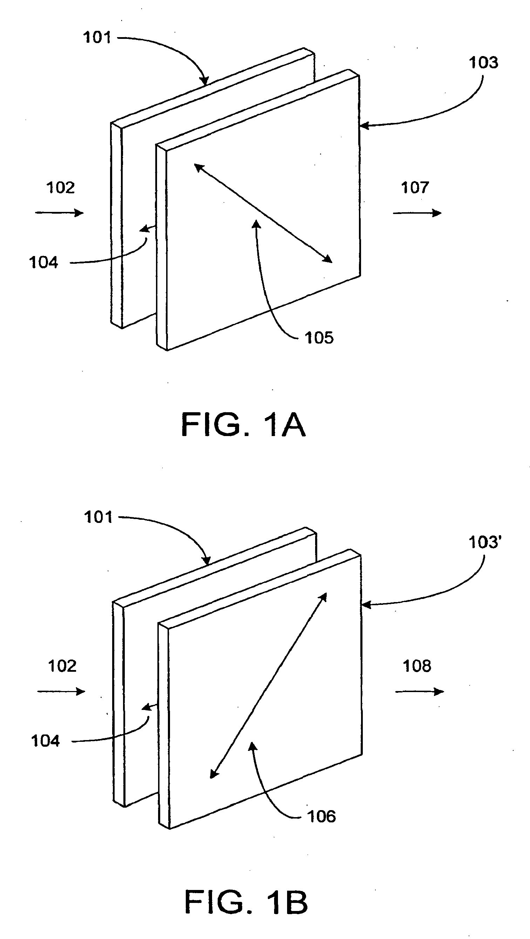

FIG. 1A shows the configuration of the surface mode modulator. Linear sheet polarizer 101 has an axis 104 (parallel to the horizontal in this case) shown by the partially obscured arrowed line. Unpolarized light 102 is about to pass through the polarizer and is shown as arrowed line 102. SMD 103 is a phase shifting device that can provide 1/4-wave retardation. The axis 105 of the SMD 103 is shown at a 45 degree angle to the horizontal, as rotated clockwise from the horizontal, and hence at a 45 degree angle to the linear polarizer axis 104. When the unpolarized light 102 passes through linear sheet polarizer 101, the light becomes linearly polarized in a plane aligned to the axes 104 of the linear sheet polarizer 101. The polarized light then enters the SMD 103, which when operating at a quarter lambda, or one quarter wavelength, or quarter wave retardation, produces circularly polarized light of a certain handedness as indicated by arrowed line 107 indicating the direction of the emerging light rays.

FIG. 1B shows an alternate configuration of the surface mode modulator. Linear sheet polarizer 101 has axis 104 (also parallel to the horizontal, as shown in FIG. 1A) is shown by the partially obscured arrowed line. Unpolarized light 102 is about to pass through the linear sheet polarizer 101 and is shown as the arrowed line. SMD 103' is a phase shifting device that can provide approximately 1/4-wave retardation. The axis 106 of SMD 103' is shown at a 45 degree angle to the horizontal, with reference to axis 104, having been rotated 45 degrees counter clockwise assuming an initial horizontal position that had been parallel to linear polarizer axis 104. Hence axis 106 is orthogonal to axis 105.

Once the unpolarized light 102 passes through linear sheet polarizer 101, the light becomes linearly polarized in a plane aligned to the axis 104 of the linear polarizer. The polarized light then enters the SMD 103', which when operating at a quarter lambda, or one quarter wavelength, or quarter wave retardation, again produces circularly polarized light of a certain handedness, as depicted by arrowed line 108 indicating the direction of the emerging light rays. However, since the orientation of the SMD axis in FIG. 1B is orthogonal to the axis of the similar part in FIG. 1A, the resultant circularly polarized light will be of the opposite handedness of that produced by the arrangement shown in FIG. 1A.

The relationship between the polarizer and modulator axes' angles is relative and not absolute. The entire arrangement can be rotated within the plane of the device by any amount and the resultant output will still be circularly polarized light. The present design is not limited to devices whose linear polarizer component axes are parallel to the horizontal. Further, the spectacle circular polarizer analyzers typically have their linear polarizer component axes orthogonal to the light being analyzed to optimize their dynamic range.

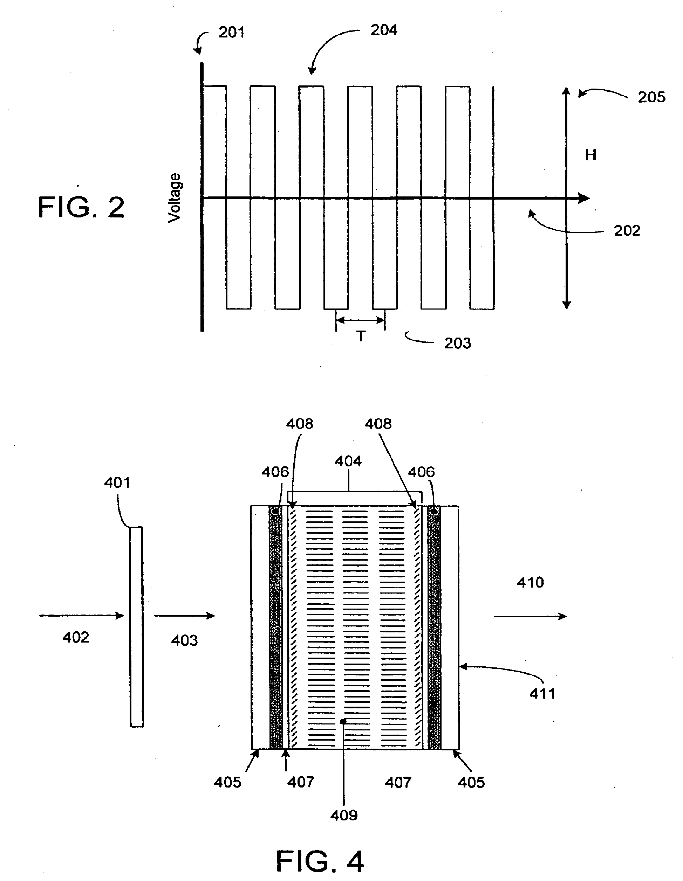

The construction of a surface mode modulator is discussed with respect to FIG. 4, including the specifics of the process for producing the phase shift required to produce circularly polarized light as depicted in FIGs. 1A and 1B.

In FIG. 4, SMD cell 411 is made up of two parallel plates of glass 405, with a film of liquid crystal material 404 (brackets), just a few microns (usually 4 to 6) thick.

FIG. 4 is not to scale but is provided to facilitate an understanding of the part's construction. The left and right facing speckled layers 406 are coatings of indium tin oxide (ITO), a transparent conductor. Driving voltage is supplied to this conductor. Left and right polyamide layers 407 are coated on the left and right indium tin oxide layers 406, and are in contact with the liquid crystal material. The polyamide layers 407, called director alignment layers, are typically rubbed or buffed in the manufacturing process and this creates microscopic grooves that help align the liquid crystal directors 408. Further, liquid crystal directors 408 are shown at the left and right surfaces of the director alignment layers using diagonal hatching representing the directors in immediate contact with the director alignment layers (407). This diagonal hatching represents the tilt angle of the liquid crystal directors. The SMD operates using a surface effect, unlike most manufactured liquid crystal parts that depend entirely on the bulk (408) of liquid crystal directors 409. The horizontal hatching of liquid crystal directors 409 gives the direction of the director molecules of liquid crystal material. The liquid crystal directors 409 are clumps of molecules that are dipoles that align themselves in an electric field.

The SMD has three states. The first state is at rest, where no voltage is applied to the cell for a period of time. The second and third states are the two working states, where either a low or zero voltage is applied. These second and third states are of interest here.

When a high voltage is applied, the second state, the device is isotropic and no phase shifts occur because the surface directors 408 are aligned with the bulk directors 404 or horizontal dashed lines 409, and the result is no phase shifting.

When a low or zero voltage is applied to the ITO layers, the third state, (typically approximately a volt or two) the low or zero voltage controls the alignment or the tilt of the directors 408. The tilt of the surface directors is proportional to the voltage applied. Voltage in this configuration controls the phase shifting effect, and with the relationship between voltage and phase shifting known, the device can be tuned to produce retardation for a specific wavelength, thereby enabling the projector's polarized light to match analyzer and screen characteristics.

Light 402 is unpolarized and corresponds to unpolarized light 102 in FIGs. 1A and 1B. The light 403, after having passed through linear polarizer 401 is linearly polarized following the orientation as given in FIGs. 1A and 1B. The polarization can follow the orientations shown in FIGs. 1A or 1B in which case the amount of phase shifting is controlled by voltage supplied to the SMD 411. The light emerging from SMD 411, shown by arrowed line 410, is circularly polarized - either left- or right-handed circularly polarized, depending upon whether or not the axis of the SMD is at 45 or 135 degrees to the axis of the linear polarizer. The linearly polarized light 403 entering SMD 411 can be thought of as having been resolved into two orthogonal components. One component travels faster than the other, resulting in a phase shifting between the two orthogonal polarized waves emerging from SMD 411. The phase shifted waves are then recombined by means of vector summation into circularly polarized light. This phase shifting is, in effect, voltage controlled and enables tuning circularly polarized light for a specific wavelength.

Liquid crystal directors 409 (diagonal hatched lines) are adjacent to the rub layers 407. These liquid crystal directors 408 have their tilt angle dictated, in part, by the rub layer. The bulk of liquid crystal directors (bracket 404 with individual directors 409) are unaffected by the rub layer. Only the liquid crystal directors at surfaces 408 are affected. The voltage is applied to the device via the ITO layers 406.. The greater the voltage, the more parallel the surface directors 408 will be to the bulk (directors 409 within bracketed region 404) or perpendicular to the rub layer 407. With a high enough voltage the parts become isotropic and lose all phase shifting properties. The anisotropicity of the SMDs can be controlled by varying voltage to produce the desired result. Degree of tilt is proportional to the voltage supplied. The amount of phase shift can be altered by varying the voltage. Varying the voltage in this manner can tune the retardation to produce circularly polarized light that can be adjusted or tweaked to the precise value employed in retarders used in the analyzer spectacles, as is shown in FIG. 3B.

FIG. 3A shows two projectors running left and right images. Projection in the manner shown in FIG. 3A is generally understood by workers in the field. The projectors have synchronized field rates and the fields are in phase. Left and right images emerge from left and right projectors 301 and 302 respectively. In general, the left handed projector can project right images and vice versa. Left and right images are projected through lenses 303 and 304 onto screen 312. Images may be viewed using selection device 310 by observer 311. Selection device 311 as shown in FIG. 3B in detail, has two circular analyzers 314 and 315. The modulators 305 and 307 correspond to the assemblies described with reference to FIGs. 1A and 1B. These modulators 305 and 307 are run in steady state or at carrier modulated voltage as explained in greater detail herein and with reference to FIG. 2. The modulators 305 and 307 are driven by electronics packages 308 and 309 by cables 306 and 313. Individual electronics drivers are used to adjust each modulator for optimum performance. One modulator outputs left-handed circularly polarized light and the other modulator outputs right-handed circularly polarized light following the teachings of FIGs. 1A and 1B.

FIG. 2 shows the waveform of the voltage supplied by electronics 308 and 309 to the SMD. The voltages to the two devices are carrier modulated. The carrier may be supplied for the steady state condition because supplying such a carrier can protect the longevity of the SMD. As long as the DC offset is zero no electrochemical decomposition or plating may occur. If the device is operated with a substantial DC offset, performance of the SMD can deteriorate. Such deterioration may be caused by plating, resulting in a concomitant reduction of performance. Therefore, the present device preferably operates with a net DC offset of zero, suggesting the use of a carrier. A wide range of carrier frequencies may be employed. However, as a matter of practice, a carrier frequency of a few thousand KHz, such as 1 to 3 KHz, may be employed.

The period T is the reciprocal of the carrier frequency. T is shown in FIG. 2 at point 203. Line 202 is the time axis, line 201 is the voltage axis, and H represents the voltage. Changing the value of H and leaving the carrier unchanged allows for precise tuning of the circular polarization at the projector. Such tuning can meet the requirements of the projection theater using left and right eyewear analyzers. The values of the quarter-wave retarders used in the analyzers are difficult to control in manufacture. Birefringence or phase shifts can also affect the polarized light reflected by the screen because of the binder material used in the metallic paint on the screen surface. Hence, the projector setup can be tuned to be optimized for a particular batch of analyzer material and theater screen depending on circumstances.

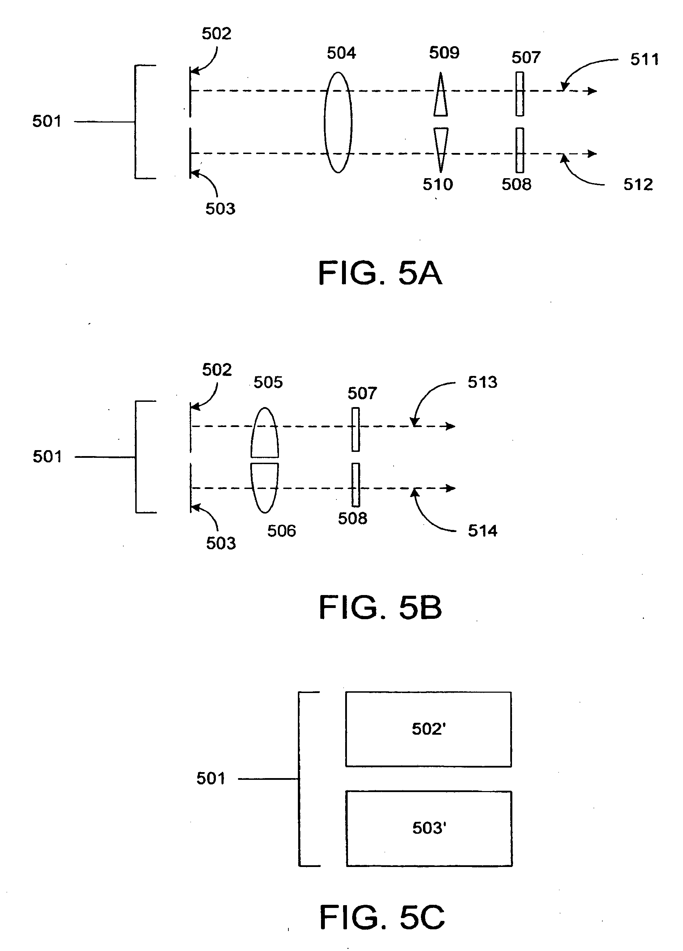

Another related class of embodiments is described with respect to FIGs. 5A, 5B and 5C. The SMD can also be used for tuning circularly polarized light using a dual lens projection system, or a similar prism or mirror box setup. The present device needs two optical systems for successful implementation. These two optical systems can be provided by either two projectors or a single projector with the appropriate optics and image format. In this single projector arrangement, the left and right images are arranged on a single imaging surface and then optically superimposed onto a screen surface. Those skilled in the art often use the term "frame splitters" to describe a variety of different devices. For purposes of brevity, only two types of frame splitters will be described herein, but a person of ordinary skill in the art will readily grasp the principle and functionality required, namely the adaptation of the SMDs' ability to be tuned to the requirements of the projection screen and selection device.

FIGs. 5A and 5B are cross-sectional representational views of the interior of portions a projector and associated optics for projecting left and right images of a stereopair using a split frame format 501 such as that shown frontally in FIG. 5C as 501' wherein 501' and 501 may be split into two sub-frames, for example one left (502') and one right (503'). The top sub-frame may be a left perspective and the bottom a right perspective or vice versa, or the images may be oriented side-by-side. Many possible configurations are available and the teachings set forth here may be applied to similar designs without loss of generality.

In FIG. 5A the image surface 501 consists of two sub-frames 502 and 503 imaged through a projection lens 504. The dashed line 511 represents the image rays of the top sub-frame 502 and the dashed line 512 represents the image rays of the bottom sub-frame 503. Prisms 509 and 510 serve to bend the rays of light of the sub-frames so that the light rays eventually coincide on the projection screen (not shown). Use of prisms or similar optical devices in a stereoscopic projection application are generally known, such as in the teachings of Bernier, for example.

Parts 507 and 508 are the steady state surface mode modulators described herein. Steady state surface modulators 507 and 508 are shown positioned after prisms 509 and 510, but may have been placed before the prisms and immediately after the projection lens.

In FIG. 5B the image surface 501 includes two sub-frames 502 and 503 imaged through projection lenses 505 and 506. Such lenses are described in various references, such as Condon for example, and serve the same function as the combination of the projection lens 504 and dual prisms shown in FIG. 5A. The combination of parts also resembles the lenticular stereoscope designed by Brewster. The dashed line 511 represents the image rays of the top sub-frame 502 and the dashed line 512 represents the image rays of the bottom sub-frame 503. Lenses 505 and 506 serve to re-center the rays of light of the sub-frames so that the light rays eventually coincide on the projection screen (not shown). Again, steady state surface mode modulators 507 and 508 represent the devices explained herein. The steady state surface mode modulators 507 and 508 are shown here located after the lenses 505 and 506 but could be placed immediately between the imaging surfaces and the projection lens.

In both cases illustrated in FIGs. 5A and 5B, the electro-optical modulators and the SMDs serve to output properly tuned circularly polarized light to match the requirements of the theater screen and selection device analyzers. Power is supplied to the SMDs but such power supply is not shown.

Frame-splitting is employed in the context of a digital projector where the projector field rate cannot be adjusted to run fast enough for the field-sequential approach. Two projectors are employed and the projectors can provide twice the brightness of the field-sequential mode thereby allowing for projection on much larger screens.

Steady state SMD modulators that can produce circularly polarized light have been described in conjunction with twin lens optical systems for the projection of stereoscopic movies. These SMDs can be tuned with photonic instruments or with good precision using the human eye for theater requirement. The surface mode circular polarization modulator can be tuned empirically in the theater by using test targets, for example. Thus one can optimize the dynamic range of the selection device and reduce ghosting or crosstalk. In this way a dual projection setup using circular polarized light can provide an enhanced experience for a viewing audience.

The design presented herein and the specific aspects illustrated are meant not to be limiting, but may include alternate components while still incorporating the teachings and benefits of the invention. While the invention has thus been described in connection with specific embodiments thereof, it will be understood that further modifications are possible.

## Claims

1. An apparatus comprising:
a sheet polarizer (101);
a surface mode device (SMD) electro-optical modulator (103, 103', 305, 307);
**characterized in that** the apparatus further comprises
an electronic package (308, 309) adapted to supply carrier modulated voltage to the SMD electro-optical modulator, wherein the carrier modulated voltage drives the SMD electro-optical modulator in a steady state mode, and
wherein the sheet polarizer and SMD electro-optical modulator are configured to
be employed with at least one selection device (310) comprising an analyzer (314, 315), and the SMD electro-optical modulator is adapted to be tuned to a wavelength associated with the analyzer in the selection device.

2. The apparatus of claim 1, wherein the SMD electro-optical modulator comprises:
two substantially parallel relatively clear plates (405);
two coatings of a transparent conductor (406) located between the two substantially parallel relatively clear plates;
two polyamide layers (407) located between the two coatings of the transparent conductor; and
a film of liquid crystal material (404, 408) located between the two polyamide layers.

3. The apparatus of claim 1 or claim 2, wherein the apparatus is configured to be employed with a plurality of digital projectors (303, 304) configured to perform frame splitting.

4. The apparatus of any preceding claim , wherein the sheet polarizer (101) and the SMD electro-optical modulator (103, 103') are oriented at a predetermined angle from one another, and wherein light energy transmitted to the sheet polarizer and SMD electro-optical modulator result in circularly polarized light energy being transmitted from the SMD electro-optical modulator.

5. The apparatus of any preceding claim , further comprising at least one optical device (505, 506, 509, 510) positioned proximate the sheet polarizer.

6. The apparatus of claim 5, wherein the optical device comprises a prism (509, 510).

7. The apparatus of claim 5, wherein the optical device comprises a lens (505, 506).

8. The apparatus of any preceding claim , wherein the selection device comprises a set of glasses (310) wearable by the user in order to view a motion picture projected via the sheet polarizer and the SMD electro-optical modulator to a screen.

9. The apparatus of any preceding claim, wherein the carrier modulated voltage has substantially zero DC offset.

## Patentansprüche

1. Gerät, umfassend:
eine Polarisationsfolie (101);
einen elektrooptischen Modulator (103, 103', 305, 307) einer Oberflächenmodusvorrichtung (SMD)
**dadurch gekennzeichnet, dass** das Gerät weiter Folgendes umfasst:
eine elektronische Verpackung (308, 309), die ausgelegt ist, um eine trägermodulierte Spannung an den elektrooptischen Modulator des SMD zu liefern, wobei die trägermodulierte Spannung den elektrooptischen Modulator der SMD in einem stabilen Zustandsmodus antreibt; und
wobei die Polarisationsfolie und der elektrooptische Modulator des SMD konfiguriert sind, um mit mindestens einer Auswahlvorrichtung (310), umfassend einen Analysator (314, 315), verwendet zu werden, und der elektrooptische Modulator der SMD auf eine Wellenlänge eingestellt ist, die mit dem Analysator in der Auswahlvorrichtung assoziiert ist.

2. Gerät nach Anspruch 1, wobei der elektrooptische Modulator der SMD Folgendes umfasst:
zwei im Wesentlichen parallele relativ klare Platten (405);
zwei Beschichtungen eines transparenten Leiters (406), die sich zwischen den zwei im Wesentlichen parallelen, relativ klaren Platten befinden;
zwei Polyamidschichten (407), die sich zwischen den zwei Beschichtungen des transparenten Leiters befinden; und
einen Film aus Flüssigkristallmaterial (404, 408), der sich zwischen den zwei Polyamidschichten befindet.

3. Gerät nach Anspruch 1 oder Anspruch 2, wobei das Gerät konfiguriert ist, um mit einer Vielzahl von digitalen Projektoren (303, 304) verwendet zu werden, die konfiguriert sind, um eine Rahmenspaltung durchzuführen.

4. Gerät nach einem der vorhergehenden Ansprüche, wobei die Polarisationsfolie (101) und der elektrooptischer Modulator der SMD (103, 103') in einem vorbestimmten Winkel voneinander ausgerichtet sind, und wobei die Lichtenergie, die von der Polarisationsfolie und dem elektrooptischen Modulator der SMD übertragen wird, zu einer zirkular polarisierten Lichtenergie führt, die vom elektrooptischen Modulator der SMD übertragen wird.

5. Gerät nach einem der vorhergehenden Ansprüche, weiter umfassend mindestens eine optische Vorrichtung (505, 506, 509, 510), die nahe der Polarisationsfolie positioniert ist.

6. Gerät nach Anspruch 5, wobei die optische Vorrichtung ein Prisma (509, 510) umfasst.

7. Gerät nach Anspruch 5, wobei die optische Vorrichtung eine Linse (505, 506) umfasst.

8. Gerät nach einem der vorhergehenden Ansprüche, wobei die Auswahlvorrichtung einen Satz von Gläsern (310) umfasst, die vom Benutzer getragen werden können, um ein Bewegtbild zu sehen, das über die Polarisationsfolie und den elektrooptischen Modulator der SMD auf einen Bildschirm projiziert wird.

9. Gerät nach einem der vorhergehenden Ansprüche, wobei die trägermodulierte Spannung im Wesentlichen null Gleichspannungsverschiebung aufweist.

## Revendications

1. Appareil comprenant :
un film polarisant (101) ;
un modulateur électro-optique (103, 103', 305, 307) de dispositif à mode de surface (SMD) ;
**caractérisé par le fait que** l'appareil comprend en outre :
un boîtier électronique (308, 309) apte à fournir une tension modulée par porteuse au modulateur électro-optique SMD, la tension modulée par porteuse amenant le modulateur électro-optique SMD dans un mode d'état stable, et
le film polarisant et le modulateur électro-optique SMD étant configurés pour être employés avec au moins un dispositif de sélection (310) comprenant un analyseur (314, 315), et le modulateur électro-optique SMD étant ajusté à une longueur d'onde associée à l'analyseur dans le dispositif de sélection.

2. Appareil selon la revendication 1, dans lequel le modulateur électro-optique SMD comprend :
deux plaques relativement transparentes sensiblement parallèles (405) ;
deux revêtements d'un conducteur transparent (406) situés entre les deux plaques relativement transparentes sensiblement parallèles ;
deux couches de polyamide (407) situées entre les deux revêtements du conducteur transparent ; et
un film de matériau cristal liquide (404, 408) situé entre les deux couches de polyamide.

3. Appareil selon la revendication 1 ou la revendication 2, dans lequel l'appareil est configuré pour être employé avec une pluralité de projecteurs numériques (303, 304) configurés pour réaliser une division d'écran.

4. Appareil selon l'une quelconque des revendications précédentes, dans lequel le film polarisant (101) et le modulateur électro-optique SMD (103, 103') sont orientés à un angle prédéterminé l'un de l'autre, et dans lequel l'énergie lumineuse transmise au film polarisant et au modulateur électro-optique SMD conduit à une énergie lumineuse à polarisation circulaire qui est transmise à partir du modulateur électro-optique SMD.

5. Appareil selon l'une quelconque des revendications précédentes, comprenant en outre au moins un dispositif optique (505, 506, 509, 510) positionné près du film polarisant.

6. Appareil selon la revendication 5, dans lequel le dispositif optique comprend un prisme (509, 510).

7. Appareil selon la revendication 5, dans lequel le dispositif optique comprend une lentille (505, 506).

8. Appareil selon l'une quelconque des revendications précédentes, dans lequel le dispositif de sélection comprend un ensemble de lunettes (310) pouvant être porté par l'utilisateur afin de voir un film projeté par l'intermédiaire du film polarisant et du modulateur électro-optique SMD sur un écran.

9. Appareil selon l'une quelconque des revendications précédentes, dans lequel la tension modulée par porteuse a un décalage en continu sensiblement nul.
